(19) Europäisches Patentamt
European Patent Office
Office européen des brevets

(11) **EP 3 174 139 B1**

(12) **EUROPEAN PATENT SPECIFICATION**

(45) Date of publication and mention
of the grant of the patent:
**19.08.2020 Bulletin 2020/34**

(51) Int Cl.:
*H01G 11/24* (2013.01)   *H01G 11/32* (2013.01)
*H01G 11/38* (2013.01)   *H01G 11/86* (2013.01)
*H01M 4/04* (2006.01)    *H01M 4/139* (2010.01)
*H01M 4/62* (2006.01)    *H01M 4/02* (2006.01)
*H01G 11/28* (2013.01)

(21) Application number: **15825099.3**

(22) Date of filing: **13.07.2015**

(86) International application number:
**PCT/JP2015/069984**

(87) International publication number:
**WO 2016/013434 (28.01.2016 Gazette 2016/04)**

(54) **PRODUCTION METHOD FOR ELECTROCHEMICAL ELEMENT ELECTRODE AND ELECTROCHEMICAL DEVICE**

HERSTELLUNGSVERFAHREN FÜR ELEKTRODE FÜR ELEKTROCHEMISCHES ELEMENT UND ELEKTROCHEMISCHES ELEMENT

PROCÉDÉ DE FABRICATION D'ÉLECTRODE D'ÉLÉMENT ÉLECTROCHIMIQUE ET ÉLÉMENT ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2014 JP 2014148984**

(43) Date of publication of application:
**31.05.2017 Bulletin 2017/22**

(73) Proprietor: **Zeon Corporation**
**Tokyo 100-8246 (JP)**

(72) Inventors:
• **ISHII, Takuya**
  **Tokyo 100-8246 (JP)**
• **SHIMAHARA, Kazumichi**
  **Tokyo 100-8246 (JP)**
• **MASUDA, Azusa**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:
WO-A1-2013/039131    WO-A1-2013/109641
JP-A- 2000 011 998    JP-A- 2001 332 227
JP-A- 2013 179 040    US-A1- 2009 224 198

**Description**

{Technical Field}

The present invention relates to composite particles for an electrochemical device electrode, an electrochemical device electrode and an electrochemical device that use the composite particles for an electrochemical device electrode, a method for manufacturing the composite particles for an electrochemical device electrode, and a method for manufacturing the electrochemical device electrode.

{Background Art}

An electrochemical device such as a lithium ion secondary battery, an electric double layer capacitor or a lithium ion capacitor, which is compact and lightweight, has high energy density, and is further capable of repeatedly charging and discharging, has rapidly expanded the demand by utilizing the characteristics. The lithium ion secondary battery is used in a mobile field such as a mobile phone or a notebook personal computer, as it has a relatively high energy density. Meanwhile, the electric double layer capacitor is used as a small memory backup power supply for a personal computer or the like, as it can be charged and discharged rapidly. In addition, the electric double layer capacitor is expected to be applied as an auxiliary power supply for an electric vehicle or the like. Furthermore, the lithium ion capacitor taking advantages of the lithium ion secondary battery and the electric double layer capacitor is considered for applying to a use to which the electric double layer capacitor is applied and a use the specifications of which the electric double layer capacitor cannot satisfy, as it has a higher energy density and a higher output density than the electric double layer capacitor. Among these electrochemical devices, particularly in the lithium ion secondary battery, not only an application thereof to an in-vehicle use for a hybrid electric vehicle, an electric vehicle, or the like but also an application thereof to a power storage use has been considered recently.

An expectation for these electrochemical devices is high. Meanwhile, further improvement in the electrochemical devices, such as lowering resistance, increasing capacity, or improving mechanical characteristics and productivity is desired with expansion and development of the uses. In these circumstances, a more productive method for manufacturing an electrode for an electrochemical device is desired.

An electrode for an electrochemical device is usually obtained by laminating an electrode active material layer, which is formed by binding an electrode active material and an electroconductive material used as necessary with a binder resin, on a current collector. Examples of the electrode for an electrochemical device include an applied electrode which is manufactured by applying a slurry for an applied electrode including an electrode active material, a binder resin, an electroconductive material, and the like on a current collector and removing a solvent with heat or the like. However, it is difficult to manufacture a uniform electrochemical device due to migration of the binder resin or the like. Further, this method requires a high cost, adversely affects the working environment, and also tends to cause an increase in size of the manufacturing apparatus.

On the other hand, a method for obtaining an electrochemical device having a uniform electrode active material layer by obtaining composite particles and powder-molding thereof is proposed. As a method for forming such an electrode active material layer, for example, Patent Literature 1 discloses a method for forming an electrode active material layer by spraying and drying a slurry for composite particles including an electrode active material, a binder resin, and a dispersion medium to obtain composite particles, and then forming an electrode active material layer by dry molding such as press molding using these composite particles.

Further, Patent Literature 2 discloses a method for forming an active material layer having a large thickness by externally adding fine particles to composite particles to control fluidity.

Additionally, WO 2013/039131 A1 discloses a method for forming an active material layer pressure molding composite particles obtained by spray drying a slurry comprising an electrode active materials and a binder resin.

Incidentally, in an electrochemical device for high output, an electrode with a low basis weight in which the basis weight of composite particles is reduced when forming an electrode active material layer has been recently required. In this case, it is required to stably feed a small amount of composite particles in a constant amount to a pressure molding apparatus. However, the composite particles obtained by Patent Literatures 1 and 2 may sometimes cause various hopper troubles such as bridge and rat hole in a hopper of a constant feeder for feeding composite particles in a constant amount to a pressure molding part such as a molding roll, or in a hopper of a constant feeder in composite particles packing step in composite particles manufacturing process. Thus, it has been difficult to prepare an electrode having high thickness precision at a low basis weight.

{Citation List}

{Patent Literature}

Patent Literature 1: JP 4929792 B2
Patent Literature 2: JP 5141002 B2

{Summary of Invention}

{Technical Problem}

An object of the present invention is to provide composite particles for an electrochemical device electrode capable of preparing an electrode having high thickness precision at a low basis weight, an electrochemical device electrode and an electrochemical device that use the composite particles for an electrochemical device electrode, and to provide a method for manufacturing the composite particles for an electrochemical device electrode, and a method for manufacturing the electrochemical device electrode.

{Solution to Problem}

As a result of intensive studies to solve the above-described problems, the present inventors have found that the above-described object can be achieved by manufacturing composite particles with less fine powder, and have accomplished the present invention as defined in claim 1. A corresponding device comprising an electrode as obtained by the method for manufacturing an electrochemical device is referred to in claim 4.

{Advantageous Effects of Invention}

According to the composite particles for an electrochemical device electrode and method for manufacturing composite particles for an electrochemical device electrode of the present invention, an electrode having high thickness precision at a low basis weight can be prepared. Further, an electrochemical device electrode having high thickness precision at a low basis weight and a method for manufacturing an electrochemical device electrode can be provided. Further, an electrochemical device using this electrochemical device electrode can be provided.

{Brief Description of Drawings}

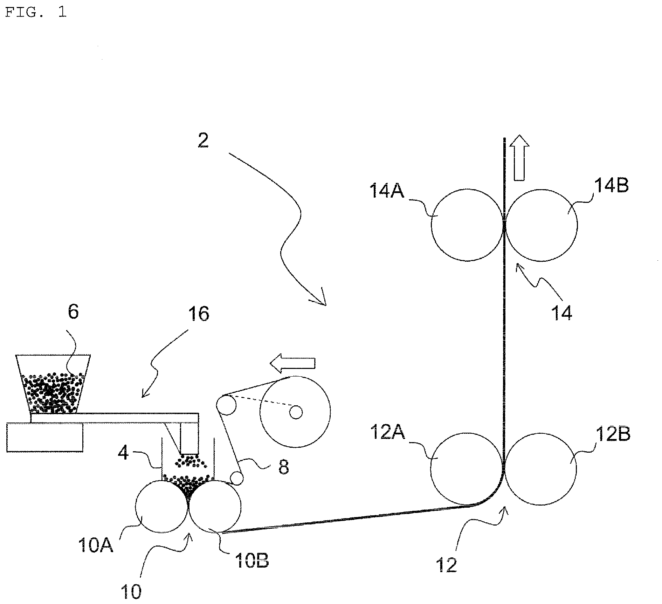

FIG. 1 is a schematic view of a roll pressure molding apparatus used in the present invention.

{Description of Embodiments}

Hereinafter, the composite particles for an electrochemical device electrode of the present invention will be described. The composite particles for an electrochemical device electrode (hereinafter, sometimes referred to as "composite particles") of the present invention are composite particles for an electrochemical device electrode that are obtained by spray-drying a slurry containing an electrode active material and a binder resin, in which particles of 40 $\mu$m or less are 50% or less of an entire amount in a number-based particle size distribution obtained by particle size measurement using a laser light diffraction method, and a cumulative 95% size (D95 size) is 300 $\mu$m or less in a volume-based particle size distribution obtained by particle size measurement using a laser light diffraction method.
Note that, hereinafter, "positive electrode active material" means an electrode active material for a positive electrode, and "negative electrode active material" means an electrode active material for a negative electrode. Further, "positive electrode active material layer" means an electrode active material layer provided in a positive electrode, and "negative electrode active material layer" means an electrode active material layer provided in a negative electrode.

(Electrode Active Material)

When the electrochemical device is a lithium ion secondary battery, as the positive electrode active material, an active material capable of doping and dedoping a lithium ion is used, and is roughly classified into one composed of an inorganic compound and one composed of an organic compound.
Examples of the positive electrode active material composed of an inorganic compound include a transition metal oxide, a transition metal sulfide, and a lithium-containing composite metal oxide consisting of lithium and a transition metal. As the transition metal, Ti, V, Cr, Mn, Fe, Co, Ni, Cu, Mo, or the like is used.

Examples of the transition metal oxide may include MnO, $MnO_2$, $V_2O_5$, $V_6O_{13}$, $TiO_2$, $Cu_2V_2O_3$, amorphous $V_2O$-$P_2O_5$, $MoO_3$, $V_2O_5$, and $V_6O_{13}$, and among them, MnO, $V_2O_5$, $V_6O_{13}$, and $TiO_2$ are preferable from the viewpoint of cycle stability and capacity. Examples of the transition metal sulfide may include $TiS_2$, $TiS_3$, amorphous $MoS_2$, and FeS. Examples of the lithium-containing composite metal oxide may include a lithium-containing composite metal oxide having a layered structure, a lithium-containing composite metal oxide having a spinel structure, and a lithium-containing composite metal oxide having an olivine type structure.

Examples of the lithium-containing composite metal oxide having a layered structure may include lithium-containing cobalt oxide ($LiCoO_2$), lithium-containing nickel oxide ($LiNiO_2$), a lithium composite oxide of Co-Ni-Mn, a lithium composite oxide of Ni-Mn-Al, and a lithium composite oxide of Ni-Co-Al. Examples of the lithium-containing composite metal oxide having a spinel structure may include lithium manganate ($LiMn_2O_4$) or $Li[Mn_{3/2}M_{1/2}]O_4$ obtained by substituting a portion of Mn in lithium manganate with a transition metal (here, M represents Cr, Fe, Co, Ni, Cu, or the like). Examples of the lithium-containing composite metal oxide having an olivine type structure may include an olivine type lithium phosphate compound represented by $Li_xMPO_4$ (in the formula, M represents at least one kind selected from Mn, Fe, Co, Ni, Cu, Mg, Zn, V, Ca, Sr, Ba, Ti, Al, Si, B, and Mo, and $0 \leq X \leq 2$).

As the organic compound, for example, it is also possible to use an electroconductive polymer such as polyacetylene or poly-p-phenylene. An iron-based oxide exhibiting poor electrical conductivity may be used as a positive electrode active material covered with a carbon material by allowing a carbon source substance to exist at the time of reduction firing. Further, these compounds may be those that are subjected to partial element-substitution. The positive electrode active material may be a mixture of the inorganic compound and the organic compound.

When the electrochemical device is a lithium ion capacitor, the positive electrode active material may be a material which can reversibly carry a lithium ion and an anion such as tetrafluoroborate. Specifically, an allotrope of carbon can be preferably used. An electrode active material for use in an electric double layer capacitor can be widely used. Specific examples of the allotrope of carbon include activated carbon, polyacene (PAS), a carbon whisker, a carbon nanotube, and graphite.

Further, when the electrochemical device is a lithium ion secondary battery, examples of the negative electrode active material may include substances capable of transferring electrons in the negative electrode of the electrochemical device. When the electrochemical device is a lithium ion secondary battery, as the negative electrode active material, usually, it is possible to use a substance which can occlude and release lithium.

Examples of the negative electrode active material preferably used for the lithium ion secondary battery include carbonaceous materials such as amorphous carbon, graphite, natural graphite, mesocarbon microbeads, and pitch-based carbon fibers; electroconductive polymers such as polyacene; metals such as silicon, tin, zinc, manganese, iron and nickel, or alloys thereof; oxides or sulfates of the metals or alloys; metal lithium; lithium alloys such as Li-Al, Li-Bi-Cd, and Li-Sn-Cd; lithium transition metal nitrides; and silicone. Further, as the negative electrode active material, one in which an electroconductive material is adhered to the surface of particles of the negative electrode active material, for example, by a mechanical modification method, may be used. Moreover, one kind of the negative electrode active material may be used alone, or two or more kinds thereof may be used in combination at an arbitrary ratio.

Further, examples of the negative electrode active material preferably used when the electrochemical device is a lithium ion capacitor include the negative electrode active material formed of carbon.

A content of the electrode active material in the electrode active material layer is preferably 90 to 99.9% by weight and more preferably 95 to 99% by weight, from viewpoints of being able to increase the capacity of the lithium ion secondary battery, and to improve flexibility of the electrode and binding properties between the current collector and the electrode active material layer.

A volume average particle diameter of the electrode active material is preferably 1 to 50 $\mu$m, and more preferably 2 to 30 $\mu$m, from viewpoints of being able to reduce a blending amount of the binder resin at the time of preparing a slurry for composite particles and to suppress a decrease in the capacity of the battery, and from viewpoints of easily preparing the slurry for composite particles having a proper viscosity for spraying and being able to obtain a uniform electrode.

(Binder Resin)

The binder resin used in the present invention is not particularly limited as long as the binder resin can bind the above-described electrode active material to each other. As the binder resin, a dispersion-type binder resin having a property of being dispersed in a solvent can be preferably used.

Examples of the dispersion-type binder resin include a polymer compound such as a silicon-based polymer, a fluorine-containing polymer, a conjugated diene-based polymer, an acrylate-based polymer, polyimide, polyamide, or polyurethane, preferably include the fluorine-containing polymer, the conjugated diene-based polymer and the acrylate-based polymer, and more preferably include the conjugated diene-based polymer and the acrylate-based polymer. Each of these polymers can be used alone, or two or more kinds thereof can be mixed and used as the dispersion-type binder resin.

The fluorine-containing polymer is a polymer containing a monomer unit containing a fluorine atom. Specific examples of the fluorine-containing polymer include polytetrafluoroethylene, polyvinylidene fluoride (PVDF), tetrafluoroethylene-perfluoroalkyl vinyl ether copolymer, ethylene-tetrafluoroethylene copolymer, ethylene-chlorotrifluoroethylene copolymer, and perfluoroethylene-propene copolymer. Among them, it is preferable to contain PVDF.

The conjugated diene-based polymer is a homopolymer of a conjugated diene-based monomer, a copolymer obtained by polymerizing a monomer mixture including a conjugated diene-based monomer, or a hydrogenated product thereof. As the conjugated diene-based monomer, 1,3-butadiene, 2-methyl-1,3-butadiene, 2,3-dimethyl-1,3-butadiene, 2-chloro-1,3-butadiene, substituted linear chain conjugated pentadienes, or substituted and side chain conjugated hexadienes are preferably used, and 1,3-butadiene is more preferably used from viewpoints of being able to improve flexibility and enhance resistance to cracking in use for an electrode. Further, two or more kinds of these conjugated diene-based monomers may be included in the monomer mixture.

When the conjugated diene-based polymer is a copolymer of the conjugated diene-based monomer described above and a monomer copolymerizable therewith, examples of the copolymerizable monomer include an $\alpha,\beta$-unsaturated nitrile compound, and a vinyl compound having an acid component.

Specific examples of the conjugated diene-based polymer include a homopolymer of a conjugated diene-based monomer, such as polybutadiene or polyisoprene; a copolymer of an aromatic vinyl-based monomer and a conjugated diene-based monomer which may be carboxy-modified, such as styrene-butadiene copolymer (SBR); a copolymer of a vinyl cyanide-based monomer and a conjugated diene-based monomer, such as acrylonitrile-butadiene copolymer (NBR); hydrogenated SBR, and hydrogenated NBR.

A ratio of the conjugated diene-based monomer unit in the conjugated diene-based polymer is preferably 20 to 60% by weight, and more preferably 30 to 55% by weight. When the ratio of the conjugated diene-based monomer unit is too large, resistance to electrolytic solution tends to be lowered in case of manufacturing an electrode using composite particles including a binder resin. When the ratio of the conjugated diene-based monomer unit is too small, sufficient adhesion properties between the composite particles and a current collector tend not to be obtained.

The acrylate-based polymer is a polymer including a monomer unit derived from a compound [(meth)acrylic acid ester] represented by a general formula (1) : $CH_2=CR^1\text{-}COOR^2$ (wherein $R^1$ represents a hydrogen atom or a methyl group, $R^2$ represents an alkyl group or a cycloalkyl group, and $R^2$ may further has an ether group, a hydroxyl group, a phosphate group, an amino group, a carboxyl group, a fluorine atom, or an epoxy group), and is specifically a homopolymer of a compound represented by the general formula (1) or a copolymer obtained by polymerizing a monomer mixture including a compound represented by the general formula (1). Specific examples of the compound represented by the general formula (1) include a (meth)acrylic acid alkyl ester such as methyl (meth)acrylate, ethyl (meth)acrylate, propyl (meth)acrylate, isopropyl (meth)acrylate, n-butyl (meth)acrylate, isobutyl (meth)acrylate, cyclohexyl (meth)acrylate, 2-ethylhexyl (meth)acrylate, isopentyl (meth)acrylate, isooctyl (meth)acrylate, isobornyl (meth)acrylate, isodecyl (meth)acrylate, lauryl (meth)acrylate, stearyl (meth)acrylate, and tridecyl (meth)acrylate; an ether group-containing (meth)acrylic acid ester such as butoxyethyl (meth)acrylate, ethoxy diethylene glycol (meth)acrylate, methoxy dipropylene glycol (meth)acrylate, methoxy polyethylene glycol (meth)acrylate, phenoxyethyl (meth)acrylate, and tetrahydrofurfuryl (meth)acrylate; a hydroxyl group-containing (meth)acrylic acid ester such as 2-hydroxyethyl (meth)acrylate, 2-hydroxypropyl (meth)acrylate, 2-hydroxy-3-phenoxypropyl (meth)acrylate, and 2-(meth)acryloyloxyethyl-2-hydroxyethyl phthalate; a carboxylic acid-containing (meth)acrylic acid ester such as 2-(meth)acryloyloxyethyl phthalate; a fluorine group-containing (meth)acrylic acid ester such as perfluorooctylethyl (meth)acrylate; a phosphate group-containing (meth)acrylic acid ester such as ethyl phosphate (meth)acrylate; an epoxy group-containing (meth)acrylic acid ester such as glycidyl (meth)acrylate; and an amino group-containing (meth)acrylic acid ester such as dimethylaminoethyl (meth)acrylate.

Note that, in the present specification, "(meth)acryl" means "acryl" and "methacryl." Further, "(meth)acryloyl" means "acryloyl" and "methacryloyl."

Each of these (meth)acrylic acid esters can be used alone, or two or more kinds thereof can be used in combination. Among them, a (meth)acrylic acid alkyl ester is preferable, and methyl (meth)acrylate, ethyl (meth)acrylate, n-butyl (meth)acrylate, and a (meth)acrylic acid alkyl ester containing an alkyl group having 6 to 12 carbon atoms are more preferable. By selecting these, it is possible to decrease a swelling property with an electrolytic solution, and to improve the cycle characteristics.

Further, when the acrylate-based polymer is a copolymer of the compound represented by the general formula (1) described above and a monomer copolymerizable therewith, examples of the copolymerizable monomer include carboxylic acid esters containing two or more carbon-carbon double bonds, an aromatic vinyl-based monomer, an amide-based monomer, olefins, a diene-based monomer, vinyl ketones, a heterocyclic ring-containing vinyl compound, an $\alpha,\beta$-unsaturated nitrile compound, and a vinyl compound containing an acid component.

Among the copolymerizable monomers, the aromatic vinyl-based monomer is preferably used, from viewpoints that high resistance to deformation and high strength can be obtained, and sufficient adhesion properties between the electrode active material layer and the current collector is obtained when an electrode is manufactured. Examples of the aromatic vinyl-based monomer include styrene.

Note that, when a ratio of the aromatic vinyl-based monomer is too large, sufficient adhesion properties between the electrode active material layer and the current collector tend not to be obtained. Further, when the ratio of the aromatic vinyl-based monomer is too small, resistance to electrolytic solution tends to be lowered in case of manufacturing an electrode.

A ratio of the (meth)acrylic acid ester unit in the acrylate-based polymer is preferably 50 to 95% by weight, and more preferably 60 to 90% by weight, from viewpoints of being able to improve flexibility and enhancing resistance to cracking in use for an electrode.

Examples of the $\alpha,\beta$-unsaturated nitrile compound used for the polymer included in the dispersion-type binder resin include acrylonitrile, methacrylonitrile, $\alpha$-chloro acrylonitrile, and $\alpha$-bromo acrylonitrile. Each of these $\alpha,\beta$-unsaturated nitrile compounds can be used alone, or two or more kinds thereof can be used in combination. Among them, acrylonitrile and methacrylonitrile are preferable, and acrylonitrile is more preferable.

A ratio of the $\alpha,\beta$-unsaturated nitrile compound unit in the dispersion-type binder resin is preferably 0.1 to 40% by weight, more preferably 0.5 to 30% by weight, and still more preferably 1 to 20% by weight. When the dispersion-type binder resin includes the $\alpha,\beta$-unsaturated nitrile compound unit, high resistance to deformation and high strength can be obtained in case of manufacturing an electrode. Further, when the dispersion-type binder resin includes the $\alpha,\beta$-unsaturated nitrile compound unit, adhesion properties between the electrode active material layer including composite particles and the current collector can be sufficient.

Note that, when the ratio of the $\alpha,\beta$-unsaturated nitrile compound unit is too large, sufficient adhesion properties between the electrode active material layer and the current collector tend not to be obtained. Further, when the ratio of the $\alpha,\beta$-unsaturated nitrile compound unit is too small, resistance to electrolytic solution tends to be lowered in case of manufacturing an electrode.

Examples of the vinyl compound having an acid component include acrylic acid, methacrylic acid, itaconic acid, maleic acid, and fumaric acid. Each of these vinyl compounds containing an acid component can be used alone, or two or more kinds thereof can be used in combination. Among them, acrylic acid, methacrylic acid, and itaconic acid are preferable, and methacrylic acid is more preferable from a viewpoint that adhesion is improved.

A ratio of the vinyl compound unit having an acid component in the dispersion-type binder resin is preferably 0.5 to 10% by weight, more preferably 1 to 8% by weight, and still more preferably 2 to 7% by weight, from a viewpoint of improving stability in use for a slurry for composite particles.

Note that, when the ratio of the vinyl compound unit having an acid component is too large, the viscosity of the slurry for composite particles is high, and it tends to become difficult to handle the slurry. Further, when the ratio of the vinyl compound unit having an acid component is too small, the stability of the slurry for composite particles tends to be lowered.

A shape of the dispersion-type binder resin is not particularly limited, but is preferably particulate. By being particulate, an excellent binding property is obtained, and it is possible to suppress reduction in a capacity of a manufactured electrode and deterioration of the electrode due to repeated charge and discharge. Examples of the particulate binder resin include binder resin particles in a state that the binder resin particles are dispersed in water, such as latex, and binder resin particles in a powder form obtained by drying such a dispersion.

An average particle diameter of the dispersion-type binder resin is preferably 0.001 to 10 $\mu$m, more preferably 10 to 5000 nm, and still more preferably 50 to 1000 nm, from a viewpoint of favorable strength and flexibility of the electrode to be obtained as well as favorable stability when being formed into a slurry for composite particles.

Further, a method for manufacturing the binder resin used in the present invention is not particularly limited, and it is possible to employ a known polymerization method such as an emulsion polymerization method, a suspension polymerization method, a dispersion polymerization method, or a solution polymerization method. Among them, it is preferred to manufacture the binder resin by the emulsion polymerization method because it is easy to control the particle diameter of the binder resin. Further, the binder resin used in the present invention may be particles having a core-shell structure obtained by polymerizing a mixture of two or more kinds of monomers in stages.

A blending amount of the binder resin in the composite particles of the present invention is, on a dry weight basis, preferably 0.1 to 20 parts by weight, more preferably 0.5 to 10 parts by weight, and still more preferably 1 to 5 parts by weight with respect to 100 parts by weight of the electrode active material, from viewpoints of being able to sufficiently secure adhesion properties between the electrode active material layer to be obtained and the current collector, and to lower internal resistance of the electrochemical device.

(Water-Soluble Polymer)

The composite particles of the present invention preferably contain a water-soluble polymer. A water-soluble polymer used in the present invention is a polymer having an undissolved matter of less than 10.0% by weight when 0.5 g of the polymer is dissolved in 100 g of pure water at 25°C.

Specific examples of the water-soluble polymer include cellulose-based polymers such as carboxymethyl cellulose, methyl cellulose, ethyl cellulose, and hydroxypropyl cellulose, an ammonium salt or an alkali metal salt thereof, an alginic acid ester such as alginic acid propylene glycol ester, an alginic acid salt such as sodium alginate, polyacrylic acid, polyacrylic acid salt (or polymethacrylic acid salt) such as sodium polyacrylate (or sodium polymethacrylate), polyvinyl alcohol, modified polyvinyl alcohol, poly-N-vinylacetamide, polyethylene oxide, polyvinyl pyrrolidone, polycarboxylic acid, oxidized starch, starch phosphate, casein, various kinds of modified starche, chitin, and a chitosan derivative. Further, the water-soluble polymer may be used in combination with a water-insoluble polysaccharide polymer, thereby obtaining a reinforcing effect of the composite particles.

Here, as the water-insoluble polysaccharide polymer fibers, polysaccharide polymer nanofibers are preferably used. Among the polysaccharide polymer nanofibers, it is preferable to use one or any mixture selected from bio-nanofibers of biological origin, such as cellulose nanofibers, chitin nanofibers, or chitosan nanofibers, from a viewpoint of having a high reinforcing effect of the composite particles due to flexibility and high tensile strength of fibers, and being able to increase particle strength, and a viewpoint of obtaining favorable dispersion of the electroconductive material. Among them, it is more preferable to use cellulose nanofibers, and particularly preferable to use cellulose nanofibers made from bamboo, conifer tree, broadleaf tree, and cotton.

(Electroconductive Material)

The composite particles of the present invention may include an electroconductive material if necessary. As the electroconductive material used if necessary, an electroconductive carbon such as furnace black, acetylene black (hereinafter may be abbreviated as "AB"), Ketjen black (registered trademark of Akzo Nobel Chemicals International B.V.), carbon nanotube, carbon nanohorn or graphene is preferably used. Among them, acetylene black is more preferable. An average particle diameter of the electroconductive material is not particularly limited, and is preferably smaller than the average particle diameter of the electrode active material, and is preferably 0.001 to 10 $\mu$m, more preferably 0.005 to 5 $\mu$m, and still more preferably 0,01 to 1 um, from a viewpoint of exhibiting sufficient electroconductivity with a smaller use amount.

A blending amount of the electroconductive material in the case of adding the electroconductive material is preferably 1 to 10 parts by weight, and more preferably 1 to 5 parts by weight, with respect to 100 parts by weight of the electrode active material.

(Other Additives)

The composite particles of the present invention may further contain other additives if necessary. Examples of other additives include surfactants. Examples of the surfactant include an anionic surfactant, a cationic surfactant, a nonionic surfactant, and an amphoteric surfactant such as an anion-nonionic surfactant, and among them, the anionic surfactant or the nonionic surfactant is preferable. A blending amount of the surfactant is not particularly limited, and preferably 0 to 50 parts by weight, more preferably 0.1 to 10 parts by weight, and still more preferably 0.5 to 5 parts by weight, with respect to 100 parts by weight of the electrode active material, in the composite particles. The surfactant is added, whereby surface tension of the droplets obtained from the slurry for composite particles can be adjusted.

(Method for Manufacturing Composite Particles)

The composite particles of the present invention contain an electrode active material, and a binder resin, and each of the electrode active material and the binder resin does not exist as individually independent particles, but one particle is formed of two or more components including the electrode active material and the binder resin as constituting components. Specifically, a plurality of particles is combined to each other to form a secondary particle while an individual particle including above-mentioned two or more components substantially maintains a shape thereof, and a particle formed by binding a plurality of (preferably several to several thousand) electrode active materials with the binder resin is preferable.

Further, the composite particles of the present invention is obtained by spray-drying the slurry for composite particles containing an electrode active material, a binder resin, a water-soluble polymer and other components such as an electroconductive material added if necessary. Hereinafter, the spray-drying granulation method will be described.

(Spray-drying Granulation Method)

First, a slurry for composite particles (hereinafter, sometimes referred to as "slurry") containing an electrode active material, a binder resin, and a water-soluble polymer and an electroconductive material added if necessary is prepared. The slurry for composite particles can be prepared by dispersing or dissolving the electrode active material, the binder resin, and the water-soluble polymer and the electroconductive material added if necessary in a solvent. Note that, in this case, when the binder resin is dispersed in a solvent, the binder resin can be added in a state of being dispersed in the solvent.

As the solvent used to obtain the slurry for composite particles, water is preferably used, and a mixed solvent of water and an organic solvent may be used. One of only the organic solvents may be used alone, or several kinds thereof may be used in combination. Examples of the organic solvent usable in this case include alcohols such as methyl alcohol, ethyl alcohol, and propyl alcohol; alkyl ketones such as acetone and methyl ethyl ketone; ethers such as tetrahydrofuran, dioxane, and diglyme; and amides such as diethylformamide, dimethyl acetamide, N-methyl-2-pyrrolidone, and dimethyl imidazolidinone. When an organic solvent is used, alcohols are preferable. By using water and an organic solvent having a boiling point lower than that of water together, a drying speed can be increased during spray-drying. Further, this makes it possible to adjust the viscosity and the fluidity of the slurry for composite particles, and to enhance manufacturing efficiency.

Further, the viscosity of the slurry for composite particles is preferably 10 to 3,000 mPa·s, more preferably 30 to 1,500 mPa·s, and still more preferably 50 to 1,000 mPa·s at room temperature, from a viewpoint of improving productivity of granulation of composite particles by spray-drying.

Note that, the viscosity described in the present specification is a viscosity at 25°C and a shear rate of 10 s$^{-1}$. Measurement is possible by using Brookfield digital viscometer DV-II + Pro.

An amount of a solvent to be used in preparing the slurry is preferably 1 to 70% by weight, more preferably 5 to 70% by weight, and still more preferably 10 to 65% by weight in a solid content concentration of the slurry, from a viewpoint of dispersing the binder resin uniformly in the slurry.

A method for or order of dispersing or dissolving the electrode active material, the binder resin, and the water-soluble polymer and the electroconductive material added if necessary in a solvent is not particularly limited. Examples thereof include a method for adding the electrode active material, the binder resin, the water-soluble polymer and the electroconductive material to a solvent and mixing together, a method for dissolving the water-soluble polymer in a solvent, then adding the electrode active material and the electroconductive material thereto and mixing together, and finally adding the binder resin (for example, latex) dispersed in a solvent thereto and mixing together, and a method for adding the electrode active material and the electroconductive material to the binder resin dispersed in a solvent and mixing together, and adding the water-soluble polymer dissolved in a solvent to this mixture and mixing together.

Further, as a mixing apparatus, for example, it is possible to use a ball mill, a sand mill, a bead mill, a pigment dispersing machine, a grinding machine, an ultrasonic dispersing machine, a homogenizer, a homomixer, or a planetary mixer. Mixing is preferably performed at room temperature to 80°C for ten minutes to several hours.

Subsequently, the obtained slurry for composite particles is subjected to spray-drying and granulated. Spray-drying is a method for spraying the slurry into hot air and drying it. Examples of an apparatus used for spraying the slurry include an atomizer. As the atomizer, apparatuses such as a rotary disk method, a cup method, a two fluid nozzle method, and a pressing method are exemplified. In the rotary disk method and the cup method, the slurry is introduced into approximately the center of the disk to be rotated at high speed, the slurry is emitted outside the disk by a centrifugal force of the disk, and the slurry is sprayed at that time. In the rotary disk method, the rotational speed of the disk depends on the size of the disk, but is preferably 5,000 to 30,000 rpm and more preferably 15,000 to 30,000 rpm. As the rotational speed of the disk is decreased, spray droplets become larger and the average particle diameter of the obtained composite particles becomes larger. Examples of the atomizer of the rotary disk method include a pin type and a vane type, but the pin type atomizer is preferable. The pin type atomizer is a kind of centrifugal spraying apparatus using a spray disk. The spray disk includes a plurality of spray rollers, disposed between upper and lower mounting disks detachably and substantially concentrically along peripheries thereof. The slurry for composite particles is introduced from the center of the spray disk, is attached to the spray rollers by a centrifugal force, moves on the surfaces of the rollers to the outside, and is finally separated from the surfaces of the rollers to be sprayed.

The cup type atomizer used in the cup method is constituted so as to spray a slurry for composite particles by centrifugal force to obtain atomized droplets, by introducing the slurry for composite particles into a cup at a tip of an atomizer rotating at a prescribed rotation speed, and allowing to be discharged from an edge part of the cup while applying a rotation force to the slurry for composite particles. Further, the direction of the cup can be upward or downward, and is not limited to either direction, and favorable atomization is possible in both directions.

The rotational speed of the disk or the cup in the rotary disk method or the cup method is not particularly limited, but is preferably 5,000 to 40,000 rpm and still more preferably 15,000 to 30,000 rpm. As the rotational speed of the disk or cup is decreased, spray droplets become larger and the average particle diameter of the obtained composite particles becomes larger.

Further, in the pressing method, the slurry for composite particles is pressurized, sprayed from a nozzle, and dried.

The temperature of the slurry for composite particles to be sprayed is preferably room temperature, but may be a temperature higher than room temperature by heating. Further, the hot air temperature during spray-drying is preferably 25 to 250°C, more preferably 50 to 200°C, and still more preferably 80 to 150°C. In the spray-drying method, a method for blowing the hot air is not particularly limited. Examples thereof include a method in which the hot air flows in parallel with a spray direction in a transverse direction, a method in which the slurry is sprayed in a drying tower apex and go down along with the hot air, a method in which the sprayed droplets and the hot air are subjected to counterflow contact, and a method in which the sprayed droplets first flow in parallel with the hot air, then fall by gravity, and are subjected to counterflow contact with the hot air.

(Classification)

In the present invention, it is necessary to further classify the granulated particles obtained by spray-drying. A method of classification is not particularly limited, and classification methods described below can be adopted. The classification methods include dry classification methods such as gravity classification, inertial classification, and centrifugal classification; wet classification methods such as sedimentary classification, mechanical classification and hydraulic classification; screen classification methods using a screen mesh such as a vibrating screen or a planar motion screen. Among them, the screen classification method is preferable.

(Physical Properties of Composite Particles)

A shape of the composite particles of the present invention is preferably substantially spherical, from viewpoints that fluidity is favorable and hopper trouble can be prevented, and viewpoints that feeding of the composite particles from the hopper is favorable, and an electrode with favorable thickness precision can be obtained. That is, when a minor axis diameter of the composite particle is 1s, a major axis diameter thereof is 11, and 1a = (1s + 11)/2, a sphericity (%) represented by (11 - 1s) $\times$ 100/1a is preferably 15% or less, more preferably 13% or less, still more preferably 12% or less, and most preferably 10% or less. Here, the minor axis diameter 1s, and the major axis diameter 11 can be measured with photographic image of a transmission electron microscope or a scanning electron microscope. When the sphericity is too large, fluidity of the composite particles is deteriorated, and hopper trouble is likely to occur. Further, the basis weight precision of the electrode is deteriorated, and it becomes difficult to obtain an electrode with favorable thickness precision.

As to the particle diameter of the composite particles of the present invention, particles of 40 $\mu$m or less are 50% or less, preferably 40% or less, more preferably 10% or less, and still more preferably 5% or less of an entire amount in a number-based particle size distribution obtained by particle size measurement using a laser light diffraction method. Note that, the particle size distribution is obtained by measurement with a laser diffraction type particle size distribution measuring apparatus (for example, SALD-3100; manufactured by Shimadzu Corporation, Microtrac MT-3200II; manufactured by Nikkiso Co., Ltd.).

When the particles of 40 $\mu$m or less are within the above range in a number-based particle size distribution, fluidity of composite particles is favorable, hopper trouble is unlikely to occur, and a uniform electrode with high thickness precision can be obtained. Further, when a ratio of particles of 40 um or less is too large in a number-based particle size distribution, fluidity of the composite particles is deteriorated, and hopper trouble is likely to occur. Further, the thickness precision of the obtained electrode is deteriorated.

Further, as to the particle diameter of the composite particles of the present invention, a cumulative 95% size (D95 size) is 300 $\mu$m or less, preferably 40 to 250 $\mu$m, more preferably 50 to 225 $\mu$m, and still more preferably 60 to 200 $\mu$m in a volume-based particle size distribution obtained by particle size measurement using a laser light diffraction method.

When the cumulative 95% size (D95 size) is within the above range in a volume-based particle size distribution, fluidity is favorable and hopper trouble can be prevented, feeding of the composite particles from the hopper is favorable, and an electrode with favorable thickness precision can be obtained.

When the cumulative 95% size (D95 size) is too large in a volume-based particle size distribution, thickness variation occurs in molding the electrode active material layer because there are many coarse particles in the composite particles. Further, when the cumulative 95% size (D95 size) is too small in a volume-based particle size distribution, fluidity of the composite particles is deteriorated, and hopper trouble is likely to occur. Further, thickness variation occurs in molding the electrode active material layer.

Further, as to the particle diameter of the composite particles of the present invention, the cumulative 50% size (D50 size) is preferably 50 to 160 $\mu$m, more preferably 50 to 130 $\mu$m, and still more preferably 50 to 110 $\mu$m in a volume-based particle size distribution obtained by particle size measurement using a laser light diffraction method.

Further, a compression degree of the composite particles of the present invention is preferably 15% or less, from viewpoints that fluidity of the composite particles is favorable and hopper trouble can be prevented, and viewpoints that feeding of the composite particles from the hopper is favorable, and an electrode with favorable thickness precision can be obtained. When the compression degree of the composite particles is too large, fluidity of the composite particles is deteriorated, thus hopper trouble is likely to occur, and the thickness precision of the obtained electrode is deteriorated.

Here, the compression degree is calculated from the following formula, using packed bulk density and loose bulk density.

$$\text{Compression degree} = \{(\text{Packed bulk density} - \text{Loose bulk density})/\text{Packed bulk density}\} \times 100$$

Note that, the "loose bulk density" refers to a bulk density in a loosely packed state, and is measured by passing a sample through a JIS 22 mesh (710 $\mu$m) screen and uniformly supplying into a cylindrical container (material: stainless) having a diameter of 5.03 cm and a height of 5.03 cm (volume of 100 mL) from 23 cm above, leveling off the top surface of the sample, and weighing the sample. On the other hand, the "packed bulk density" refers to a bulk density when closely packed by adding tapping. Here, tapping refers to an operation of closely packing a sample by repeatedly dropping the container filled with the sample from a constant height to give a light impact to the bottom part. In practice, when measuring a loose bulk density, after leveling off the top surface of the sample and weighing the sample, a cap (equipment of the following powder tester manufactured by HOSOKAWA MICRON CORPORATION) is fitted to the top of this container, and the powder is added to the upper edge of the cap, and tapping is performed 180 times from a tap height of 1.8 cm. After completion of the tapping, the cap is removed, the powder is leveled off the top surface of the container and weighed, and the bulk density in this state is defined as packed bulk density. These operations can be measured, for example, by using a powder tester (PT-D, PT-S, etc.) manufactured by HOSOKAWA MICRON CORPORATION.

(Electrochemical Device Electrode)

The electrochemical device electrode of the present invention is an electrode obtained by laminating an electrode active material layer including the above-described composite particles on a current collector. As a material of the current collector, for example, metal, carbon, or an electroconductive polymer can be used, and metal is preferably used. As metal, generally, copper, aluminum, platinum, nickel, tantalum, titanium, stainless steel, other alloys or the like is used. Among them, copper, aluminum or an aluminum alloy is preferably used from viewpoints of electroconductivity and voltage resistance. Further, when high voltage resistance is required, high-purity aluminum disclosed in JP 2001-176757 A or the like can be preferably used. The current collector is a film or a sheet, and the thickness thereof is appropriately selected depending on the intended use, but is preferably 1 to 200 $\mu$m, more preferably 5 to 100 $\mu$m, and still more preferably 10 to 50 $\mu$m.

According to the present invention, a method for directly subjecting the composite particles to pressure molding on the current collector is proposed. Examples of the pressure molding method include, a roll pressure molding method in which, using a roll-type pressure molding apparatus including a pair of rolls, while the current collector is sent with the rolls, the composite particles are supplied to the roll-type pressure molding apparatus with a supplying apparatus such as a vibration feeder or a screw feeder, and the electrode active material layer is thereby molded on the current collector, a method in which the composite particles are sprayed on the current collector, leveled with a blade or the like to adjust the thickness, and then subjected to molding with a pressure apparatus, and a method in which a mold is filled with the composite particles, and the mold is pressurized for molding. Among them, the roll pressure molding method is preferable. Particularly, the composite particles of the present invention have high fluidity, thus the high fluidity makes molding by roll pressure molding possible, and this enables improvement of productivity.

The roll temperature during the roll pressure molding is preferably 10 to 100°C, more preferably 20 to 60°C, and still more preferably 20 to 50°C, for forming a uniform electrode. Further, the roll temperature during the roll pressure molding is preferably 25 to 200°C, more preferably 50 to 150°C, and still more preferably 80 to 120°C, from a viewpoint of being able to obtain sufficient adhesion properties between the electrode active material layer and the current collector. When preferred temperature range for forming a uniform electrode and preferred temperature range for enhancing adhesion properties are not overlapped, it is possible to satisfy both temperature ranges by roll pressurizing in multi-stages. Further, press linear pressure between the rolls during the roll pressure molding is preferably 10 to 1000 kN/m, more preferably 200 to 900 kN/m, and still more preferably 300 to 600 kN/m, from a viewpoint of preventing destruction of the electrode active material. Further, a molding speed during the roll pressure molding is preferably 0.1 to 20 m/min, and more preferably 4 to 10 m/min.

Further, in order to eliminate variations in the thickness of the molded electrochemical device electrode, and to increase the capacity by increasing the density of the electrode active material layer, post-pressure may be further applied if necessary. A method of the post-pressure is preferably applied in a press step with a roll. In the roll press step, two cylindrical rolls are vertically arranged in parallel at narrow intervals, and are rotated in opposite directions to each other. An electrode is pinched between the rolls to be pressurized. At this time, the rolls may be subjected to temperature adjustment such as heating or cooling, if necessary.

Further, in order to enhance adhesion strength and electroconductivity of the electrode active material layer, an intermediate layer may be formed on the surface of the current collector, and among them, it is preferred that an electroconductive adhesive layer is formed.

The density of the electrode active material layer is not particularly limited, but is generally 0.30 to 10 $g/cm^3$, preferably 0.35 to 8.0 g/cm3, and more preferably 0.40 to 6.0 $g/cm^3$. Further, the thickness of the electrode active material layer is not particularly limited, but is generally 5 to 1000 $\mu$m, preferably 20 to 500 $\mu$m, and more preferably 30 to 300 $\mu$m.

(Electrochemical Device)

The electrochemical device of the present invention includes the positive electrode and the negative electrode obtained as described above, a separator and an electrolytic solution, and uses the electrochemical device electrode of the present invention in at least one of the positive electrode and the negative electrode. Examples of the electrochemical device include a lithium ion secondary battery and a lithium ion capacitor.

(Separator)

As the separator, a microporous film or non-woven fabric including a polyolefin resin such as polyethylene or polypropylene, or an aromatic polyamide resin; a porous resin coating including inorganic ceramic powder; or the like can be used. Specific examples thereof include a microporous film formed of a resin such as a polyolefin-based (polyethylene, polypropylene, polybutene, polyvinyl chloride), a mixture thereof, or a copolymer thereof; a microporous film formed of a resin such as polyethylene terephthalate, polycycloolefin, polyether sulfone, polyamide, polyimide, polyimide amide, polyaramide, nylon, or polytetrafluoroethylene; woven polyolefin-based fibers or non-woven fabric thereof; and aggregates of insulating material particles. Among them, the microporous film formed of a polyolefin-based resin is preferable because it is possible to reduce the thickness of the entire separator, and to increase the capacity per volume by increasing the active material ratio in the lithium ion secondary battery.

The thickness of the separator is preferably 0.5 to 40 $\mu$m, more preferably 1 to 30 $\mu$m, and still more preferably 1 to 25 $\mu$m, from a viewpoint of being able to reduce the internal resistance due to the separator in the lithium ion secondary battery, and a viewpoint of excellent workability in manufacturing the lithium ion secondary battery.

(Electrolytic Solution)

As an electrolytic solution for a lithium ion secondary battery, for example, a non-aqueous electrolytic solution prepared by dissolving a supporting electrolyte in a non-aqueous solvent is used. As the supporting electrolyte, a lithium salt is preferably used. Examples of the lithium salt include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_sSO_2)NLi$. Among them, $LiPF_6$, $LiClO_4$, and $CF_3SO_3Li$ which are easily dissolved in a solvent and exhibiting a high degree of dissociation are preferable. One kind of these lithium salts may be used alone, or two or more kinds thereof may be used in combination at an arbitrary ratio. The higher the degree of dissociation of the supporting electrolyte to be used is, the higher the lithium ion conductivity is, thus it is possible to control the lithium ion conductivity depending on the kind of the supporting electrolyte.

The concentration of the supporting electrolyte in the electrolytic solution is preferably 0.5 to 2.5 mol/L depending on the kind of the supporting electrolyte. When the concentration of the supporting electrolyte is too low or too high, the ion conductivity may be decreased.

The non-aqueous solvent is not particularly limited as long as the supporting electrolyte can be dissolved in the non-aqueous solvent. Examples of the non-aqueous solvent include carbonates such as dimethyl carbonate (DMC), ethylene carbonate (EC), diethyl carbonate (DEC), propylene carbonate (PC), butylene carbonate (BC), or methylethyl carbonate (MEC); esters such as $\Upsilon$-butyrolactone or methyl formate; ethers such as 1,2-dimethoxyethane or tetrahydrofuran; sulfur-containing compounds such as sulfolane or dimethyl sulfoxide; and ionic liquid used also as the supporting electrolyte. Among them, the carbonates are preferable because they have a high dielectric constant and a wide stable potential region. One kind of the non-aqueous solvents may be used alone, or two or more kinds thereof may be used in combination at an arbitrary ratio. In general, the lower the viscosity of the non-aqueous solvent is, the higher the lithium ion conductivity is. The higher the dielectric constant is, the higher the solubility of the supporting electrolyte is. However, these are in a trade-off relationship, and therefore, the lithium ion conductivity is preferably controlled for use depending on a kind of the solvent and a mixing ratio. Further, the non-aqueous solvent, in which the whole or a part of hydrogen may be replaced by fluorine, may be used as a part or as a whole.

Further, the electrolytic solution may include an additive. Examples of the additive include a carbonate-based compound such as vinylene carbonate (VC); a sulfur-containing compound such as ethylene sulfite (ES); and a fluorine-containing compound such as fluoroethylene carbonate (FEC). One kind of the additives may be used alone, or two or more kinds thereof may be used in combination at an arbitrary ratio.

Note that, as the electrolytic solution for a lithium ion capacitor, a similar electrolytic solution to the electrolytic solution usable for the above-described lithium ion secondary battery can be used.

(Method for Manufacturing Electrochemical Device)

Specific examples of a method for manufacturing an electrochemical device such as a lithium ion secondary battery or a lithium ion capacitor include a method in which a positive electrode and a negative electrode are superposed via a separator, are wound or folded depending on a battery shape, and are put into a battery container, an electrolytic solution is injected into the battery container, and the opening thereof is sealed. In addition, if necessary, expanded metal; an over-current prevention device such as a fuse or a PTC device; a lead plate, or the like may be put thereinto to prevent an increase of pressure inside the battery, overcharge and overdischarge. A shape of the lithium ion secondary battery may be any of a coin type, a button type, a sheet type, a cylinder type, a square, and a flat type. A material of the battery container is only required to inhibit infiltration of moisture into the battery. The material is not particularly limited, and may be metal, a laminate made of aluminum, or the like.

According to the present invention, composite particles for an electrochemical device electrode capable of preparing an electrode having high thickness precision at a low basis weight, an electrochemical device electrode and an electrochemical device that use the composite particles for an electrochemical device electrode, and a method for manufacturing the composite particles for an electrochemical device electrode, and a method for manufacturing the electrochemical device electrode can be provided.

{Examples}

Hereinafter, the present invention will be specifically described by showing Examples. However, the present invention is not limited to the following Examples, and can be arbitrarily changed to be performed within a range not departing from the gist of the invention and a scope equivalent thereto. Note that, in the following description, "%" and "parts" representing an amount are based on a weight, unless otherwise indicated.

In Examples and Comparative Examples, measurement of particle size distribution, measurement of compression degree, and measurement of sphericity were each performed as follows, and appearance of electrode, basis weight precision, and electrode thickness precision were each evaluated as follows.

<Measurement of Particle Size Distribution>

The particle size distribution of the composite particles was measured using a dry laser diffraction/scattering type particle size distribution measuring apparatus (manufactured by Nikkiso Co., Ltd.: Microtrac MT-3200II).

<Measurement of Compression Degree>

The compression degree was measured for the composite particles obtained in Examples and Comparative Examples, using a powder tester PT-S manufactured by HOSOKAWA MICRON CORPORATION, as follows.

First, the loose bulk density was measured by passing the composite particles obtained in Examples and Comparative Examples through a 22 mesh (710 pm) screen and uniformly supplying into a cylindrical container (material: stainless) having a diameter of 5.03 cm and a height of 5.03 cm (volume of 100 mL) from 23 cm above, leveling off the top surface of the container, and weighing the composite particles.

Next, the composite particles obtained in Examples and Comparative Examples were passed through a 22 mesh screen and uniformly supplying into the same cylindrical container used above from 23 cm above, leveled off the top surface of the container, and weighed. Thereafter, a cap (equipment of the powder tester manufactured by HOSOKAWA MICRON CORPORATION) was fitted to the top of this container, the composite particles were added to the upper edge of the cap, and tapping was performed 180 times from a tap height of 1.8 cm. Thereafter, the cap was removed, and the composite particles were leveled off at the top surface of the container and weighed, whereby the packed bulk density was measured.

The compression degree was obtained from the following formula, using the resulting packed bulk density and loose bulk density.

$$\texttt{Compression degree = \{(Packed bulk density - Loose bulk}$$

$$\texttt{density)/Packed bulk density\} × 100}$$

<Measurement of Sphericity>

The composite particles obtained in Examples and Comparative Examples were observed with a scanning electron microscope, and 30 particles observed in the image were randomly selected, and the minor axis diameter 1s and the major axis diameter 11 were measured for each particle. For each particle, the sphericity (%) represented by (11 - 1s) × 100/la was obtained (here, 1a = (1s + 11)/2) from these measured values, and the average value of these measured values was defined as sphericity (%).

<Basis Weight Precision>

The electrodes (negative electrode for lithium ion secondary battery or positive electrode for lithium ion secondary battery) prepared in Examples and Comparative Examples were cut into 10 cm in the width direction (TD direction) and 1 m in the length direction (MD direction), and as to the cut electrode, a total of 15 points (= 3 points × 5 points) with uniformly 3 points in the TD direction and uniformly 5 points in the MD direction were circularly punched into 2 cm$^2$, and the weight was measured. The value obtained by subtracting the weight of the current collecting foil from the weight of the punched electrode was defined as a basis weight, and the average value A and the value B farthest from the average value were obtained. Then, the basis weight variation was calculated from the average value A and the farthest value B, according to the following formula (1), and moldability was evaluated by the following criteria. As the basis weight variation is smaller, the uniformity of the electrode is excellent, thus it can be determined as excellent in basis weight precision.

$$\texttt{Basis weight variation (\%) = (|A - B|) × 100/A ... (1)}$$

A: Basis weight variation of less than 5%
B: Basis weight variation of 5% or more and less than 10%
C: Basis weight variation of 10% or more and less than 15%
D: Basis weight variation of 15% or more
E: There is at least one hole on the electrode layer

<Appearance of Electrode>

Appearance of the electrodes (negative electrode for lithium ion secondary battery or positive electrode for lithium ion secondary battery) prepared in Examples and Comparative Examples was inspected to confirm whether there was no defect such as chip or scrape.

<Thickness Precision>

In the above appearance inspection of the electrodes (negative electrode for lithium ion secondary battery or positive electrode for lithium ion secondary battery) prepared in Examples and Comparative Examples, the part where a chip, a scrape or the like was not found was cut into 2 m in the longitudinal direction, and the film thickness was measured at 3 points uniformly at intervals of 5 cm from the middle of the width direction (TD direction) toward both ends and uniformly at intervals of 10 cm in the length direction (MD direction), then the average value A of the film thickness and the value B farthest from the average value were obtained. Then, the thickness variation was calculated from the average value A and the farthest value B, according to the following formula (2), and moldability was evaluated by the following criteria. As the thickness variation is smaller, it can be determined as excellent in uniformity of the thickness, i.e., thickness precision.

$$\texttt{Thickness variation (\%) = (|A - B|) × 100/A ... (2)}$$

A: Thickness variation of less than 2.5%

B: Thickness variation of 2.5% or more and less than 5.0%
C: Thickness variation of 5.0% or more and less than 7.5%
D: Thickness variation of 7.5% or more and less than 10%
E: Thickness variation of 10% or more

{Example 1}

(Manufacture of Binder Resin)

62 parts of styrene, 34 parts of 1,3-butadiene, 3 parts of methacrylic acid, 4 parts of sodium dodecylbenzenesulfonate, 150 parts of ion-exchanged water, 0.4 parts of t-dodecylmercaptan as a chain transfer agent, and 0.5 parts of potassium persulfate as a polymerization initiator were put into a 5 MPa pressure resistant container with a stirrer, and stirred sufficiently. Thereafter, the resulting mixture was heated to 50°C to start polymerization. The reaction was terminated by cooling when a polymerization conversion rate became 96% to obtain a particulate binder resin S (styrene-butadiene copolymer; hereinafter, sometimes abbreviated as "SBR").

(Preparation of Slurry for Composite Particles)

97.7 parts of artificial graphite (average particle diameter: 24.5 $\mu$m, graphite interlayer distance (interplanar spacing (d value) of (002) plane by X-ray diffraction method: 0.354 nm) as a negative electrode active material, 1.6 parts of the particulate binder resin S in terms of solid content, and 0.7 parts of carboxymethyl cellulose (BSH-12; manufactured by Daiichi Kogyo Seiyaku Co., Ltd.) (hereinafter, sometimes referred as "CMC") in terms of solid content as a water-soluble polymer were mixed. Furthermore, ion-exchanged water was added thereto such that the solid content concentration became 35 wt.%, and the mixture was mixed and dispersed to obtain a slurry for composite particles.

(Manufacture of Composite Particles)

The slurry for composite particles was fed to a spray dryer (manufactured by Ohkawara Kakohki Co., Ltd.) using a pin type atomizer of the rotary disk method (diameter: 84 mm) at 255 mL/min, and spray-drying granulation was performed in the conditions at a rotation speed of 17,000 rpm, at a hot air temperature of 150°C, and at a temperature of a particle recovery exit of 90°C.
Next, the composite particles obtained by spray-drying were classified. Specifically, using a screen mesh with an opening of 125 $\mu$m, the coarse particles on the screen mesh were removed. In addition, the composite particles under the screen mesh were screened using a screen mesh of 106 $\mu$m, and the particles under the screen mesh were removed. When the particle diameter of the composite particles remained on the screen mesh was measured, particles of 40 $\mu$m or less was 0% of the entire amount in a number-based particle size distribution, the cumulative 95% size (D95 size) was 150 $\mu$m in a volume-based particle size distribution, and the cumulative 50% size (D50 size) was 110 $\mu$m in a volume-based particle size distribution. Further, the compression degree was 11%, and the sphericity was 5%.

(Preparation of Negative Electrode for Lithium Ion Secondary Battery)

Manufacture of a negative electrode for lithium ion secondary battery was performed using a roll pressure molding apparatus shown in FIG. 1. Here, a roll pressure molding apparatus 2 is provided with a hopper 4, a pre-molding roll 10 composed of a pair of rolls (10A, 10B) that compresses composite particles 6 supplied to the hopper 4 via a constant feeder 16 to a current collecting foil with an electroconductive adhesive layer 8, a molding roll 12 composed of a pair of rolls (12A, 12B) that further presses the pre-molded body formed from the pre-molding roll 10, and a molding roll 14 composed of a pair of rolls (14A, 14B), as shown in FIG. 1.
First, the current collecting foil with an electroconductive adhesive layer 8 was installed on a pair of the pre-molding rolls 10 (rolls 10A, 10B) having a roll diameter of 50 mm$\varphi$ heated to 50°C in the roll pressure molding apparatus 2. Here, the current collecting foil with an electroconductive adhesive layer 8 is a copper current collecting foil with an electroconductive adhesive layer obtained by applying an electroconductive adhesive on a copper current collector with a die coater and drying it. Next, the composite particles obtained above were supplied to the hopper 4 provided on the upper part of the pre-molding roll 10 as composite particles 6 via the constant feeder 16. When the deposition amount of the composite particles 6 in the hopper 4 provided on the upper part of the pre-molding roll 10 reached a certain height, the roll pressure molding apparatus 2 was operated at a rate of 10 m/min, and the composite particles 6 were pressure-molded by the pre-molding roll 10, a pre-molded body of a negative electrode active material layer was formed on the copper current collecting foil with an electroconductive adhesive layer. Thereafter, an electrode on which the negative electrode active material layer was pre-molded was pressed by two pairs of 300 mm$\varphi$ molding rolls 12 and 14 heated to 100°C, provided in the downstream of the pre-molding roll 10 of the roll pressure molding apparatus 2, and the electrode density was increased while the surface of the electrode was leveled. The roll pressure molding apparatus 2 was continuously operated for 10 minutes to prepare about 100 m of a negative electrode for lithium ion secondary battery.

{Example 2}

Classification conditions in the manufacture of composite particles were changed. Specifically, using a screen mesh with an opening of 135 $\mu$m, the coarse particles on the screen mesh were removed. In addition, the composite particles under the screen mesh were screened using a screen mesh of 75 $\mu$m, and the particles under the screen mesh were removed. The manufacture of composite particles was performed in the same manner as in Example 1 except for changing classification conditions. Particles of 40 $\mu$m or less of the composite particles was 0% of the entire amount in a number-based particle size distribution, the cumulative 95% size (D95 size) was 137 $\mu$m in a volume-based particle size distribution, and the cumulative 50% size (D50 size) was 87 $\mu$m in a volume-based particle size distribution. Further, the compression degree was 12%, and the sphericity was 5%. A negative electrode for lithium ion secondary battery was prepared in the same manner as in Example 1 except for using the above composite particles.

{Example 3}

Classification conditions in the manufacture of composite particles were changed. Specifically, using a screen mesh with an opening of 135 $\mu$m, the coarse particles on the screen mesh were removed. In addition, the composite particles under the screen mesh were screened using a screen mesh of 53 $\mu$m, and the particles under the screen mesh were removed. The manufacture of composite particles was performed in the same manner as in Example 1 except for changing classification conditions. Particles of 40 $\mu$m or less of the composite particles was 13% of the entire amount in a number-based particle size distribution, the cumulative 95% size (D95 size) was 94 $\mu$m in a volume-based particle size distribution, and the cumulative 50% size (D50 size) was 61 $\mu$m in a volume-based particle size distribution. Further, the compression degree was 13%, and the sphericity was 7%. A negative electrode for lithium ion secondary battery was prepared in the same manner as in Example 1 except for using the above composite particles.

{Example 4}

Classification conditions in the manufacture of composite particles were changed. Specifically, using a screen mesh with an opening of 135 $\mu$m, the coarse particles on the screen mesh were removed. In addition, the composite particles under the screen mesh were screened using a screen mesh of 38 $\mu$m, and the particles under the screen mesh were removed. The manufacture of composite particles was performed in the same manner as in Example 1 except for changing classification conditions. Particles of 40 $\mu$m or less of the composite particles was 38% of the entire amount in a number-based particle size distribution, the cumulative 95% size (D95 size) was 81 $\mu$m in a volume-based particle size distribution, and the cumulative 50% size (D50 size) was 54 $\mu$m in a volume-based particle size distribution. Further, the compression degree was 14%, and the sphericity was 8%. A negative electrode for lithium ion secondary battery was prepared in the same manner as in Example 1 except for using the above composite particles.

{Example 5}

Classification conditions in the manufacture of composite particles were changed. Specifically, using a screen mesh with an opening of 93 $\mu$m, the coarse particles on the screen mesh were removed. In addition, the composite particles under the screen mesh were screened using a screen mesh of 75 $\mu$m, and the particles under the screen mesh were removed. The manufacture of composite particles was performed in the same manner as in Example 1 except for changing classification conditions. Particles of 40 $\mu$m or less of the composite particles was 0% of the entire amount in a number-based particle size distribution, the cumulative 95% size (D95 size) was 98 $\mu$m in a volume-based particle size distribution, and the cumulative 50% size (D50 size) was 75 $\mu$m in a volume-based particle size distribution. Further, the compression degree was 13%, and the sphericity was 5%. A negative electrode for lithium ion secondary battery was prepared in the same manner as in Example 1 except for using the above composite particles.

{Example 6}

Classification conditions in the manufacture of composite particles were changed. Specifically, using a screen mesh with an opening of 63 $\mu$m, the coarse particles on the screen mesh were removed. In addition, the composite particles under the screen mesh were screened using a screen mesh of 45 $\mu$m, and the particles under the screen mesh were removed. The manufacture of composite particles was performed in the same manner as in Example 1 except for changing classification conditions. Particles of 40 $\mu$m or less of the composite particles was 26% of the entire amount in a number-based particle size distribution, the cumulative 95% size (D95 size) was 78 $\mu$m in a volume-based particle size distribution, and the cumulative 50% size (D50 size) was 52 $\mu$m in a volume-based particle size distribution. Further, the compression degree was 13%, and the sphericity was 8%. A negative electrode for lithium ion secondary battery was prepared in the same manner as in Example 1 except for using the above composite particles.

{Example 7}

The slurry for composite particles used in Example 1 was fed to a pressurizing type pressure nozzle (OUDT-25, manufactured by Ohkawara Kakohki Co., Ltd.) at 600 mL/min, and sprayed in the condition at an assist air pressure of 0.045 MPa. Further, the sprayed slurry was dried in the conditions at a hot air temperature of 150°C, and at a temperature of a particle recovery exit of 90°C.

Next, the composite particles obtained by spray-drying were classified. Specifically, using a screen mesh with an opening of 250 $\mu$m, the coarse particles on the screen mesh were removed. In addition, the composite particles under the screen mesh were screened using a screen mesh of 106 $\mu$m, and the particles under the screen mesh were removed. When the particle diameter of the composite particles remained on the screen mesh was measured, particles of 40 $\mu$m or less of the composite particles was 0% of the entire amount in a number-based particle size distribution, the cumulative 95% size (D95 size) was 260 $\mu$m in a volume-based particle size distribution, and the cumulative 50% size (D50 size) was 125 $\mu$m in a volume-based particle size distribution. Further, the compression degree was 13%, and the sphericity was 3%. A negative electrode for lithium ion secondary battery was prepared in the same manner as in Example 1 except for using the above composite particles.

{Example 8}

Using atomization device MRB-21NV (cup diameter of 50 mm) manufactured by Ransburg Industrial Finishing K.K as a cup type atomizer, the slurry for composite particles used in Example 1 was fed to a spray dryer (manufactured by Ohkawara Kakohki Co., Ltd.) at 60 mL/min, and spray-drying granulation was performed in the conditions at a rotation speed of 20,000 rpm, at a hot air temperature of 60°C, and at a temperature of a particle recovery exit of 45°C. Particles of 40 $\mu$m or less was 3% of the entire amount in a number-based particle size distribution, the cumulative 95% size (D95 size) was 126 $\mu$m in a volume-based particle size distribution, and the cumulative 50% size (D50 size) was 88 $\mu$m in a volume-based particle size distribution. Further, the compression degree was 12%, and the sphericity was 6%. A negative electrode for lithium ion secondary battery was prepared in the same manner as in Example 1 except for using the above composite particles.

{Example 9}

(Manufacture of Binder Resin)

A reactor equipped with a mechanical stirrer and a condenser was charged with 210 parts of deionized water and 1.67 parts of alkyldiphenyl oxide disulfonate (DOWFAX (registered trademark) 2A1, manufactured by The Dow Chemical Company) at a concentration of 30% in terms of solid content, under a nitrogen atmosphere, and the mixture was heated to 70°C while stirring, then 25.5 parts of a 1.96% aqueous solution of potassium persulfate was added to the reactor. Subsequently, a container equipped with a mechanical stirrer different from the above reactor was charged with 35 parts of butyl acrylate, 62.5 parts of ethyl methacrylate, 2.4 parts of methacrylic acid, 1.67 parts of alkyldiphenyl oxide disulfonate (DOWFAX (registered trademark) 2A1, manufactured by The Dow Chemical Company) at a concentration of 30% in terms of solid content, and 22.7 parts of deionized water, under a nitrogen atmosphere, and the mixture was stirred and emulsified to prepare a monomer mixed liquid. Moreover, this monomer mixed liquid was stirred, and added to the reactor charged with 210 parts of deionized water and an aqueous solution of potassium persulfate, in the emulsified state, at a constant rate over 2.5 hours, and the mixture was reacted until the polymerization conversion rate reaches 95% to obtain an aqueous dispersion of a particulate binder resin A (acrylate-based polymer).

(Preparation of Slurry for Composite Particles)

91.5 parts of LiCoO$_2$ (hereinafter, sometimes referred to as "LCO") as a positive electrode active material, 6 parts of acetylene black (HS-100, manufactured by Denki Kagaku Kogyo Kabushiki Kaisha) (hereinafter, sometimes referred to as "AB") as an electroconductive material, 1.5 parts of particulate binder resin A (acrylate-based polymer) in terms of solid content as a binder resin and 1 part of carboxymethyl cellulose (BSH-12; manufactured by Daiichi Kogyo Seiyaku Co., Ltd.) in terms of solid content as a water-soluble polymer were mixed, and a proper amount of ion-exchanged water was added thereto, then the mixture was mixed and dispersed with a planetary mixer to prepare a slurry for composite particles for a positive electrode having a solid content concentration of 50%.

(Manufacture of Composite Particles)

The slurry for composite particles was fed to a spray dryer (manufactured by Ohkawara Kakohki Co., Ltd.) using a pin type atomizer of the rotary disk method (diameter: 84 mm) at 255 mL/min, and spray-drying granulation was performed in the conditions at a rotation speed of 17,000 rpm, at a hot air temperature of 150°C, and at a temperature of a particle recovery exit of 90°C.

Next, the composite particles obtained by spray-drying were classified. Specifically, using a screen mesh with an opening of 150 $\mu$m, the coarse particles on the screen mesh were removed. In addition, the composite particles under the screen mesh were screened using a screen mesh of 53 $\mu$m, and the particles under the screen mesh were removed. When the particle diameter of the composite particles remained on the screen mesh was measured, particles of 40 $\mu$m or less of the composite particles was 10% of the entire amount in a number-based particle size distribution, the cumulative 95% size (D95 size) was 87 $\mu$m in a volume-based particle size distribution, and the cumulative 50% size (D50 size) was 56 $\mu$m in a volume-based particle size distribution. Further, the compression degree was 9%, and the sphericity was 4%.

(Preparation of Positive Electrode for Lithium Ion Secondary Battery)

First, the current collecting foil with an electroconductive adhesive layer 8 was installed on a pair of the pre-molding rolls 10 (rolls 10A, 10B) having a roll diameter of 50 mm$\varphi$ heated to 50°C in the roll pressure molding apparatus 2 shown in FIG. 1. Here, the current collecting foil with an electroconductive adhesive layer 8 is an aluminum current collecting foil with an electroconductive adhesive layer obtained by applying an electroconductive adhesive on an aluminum current collector with a die coater and drying it. Next, the composite particles obtained above were supplied to the hopper 4 provided on the upper part of the pre-molding roll 10 as composite particles 6 via the constant feeder 16. When the deposition amount of the composite particles 6 in the hopper 4 provided on the upper part of the pre-molding roll 10 reached a certain height, the roll pressure molding apparatus 2 was operated at a rate of 10 m/min, and the composite particles 6 were pressure-molded by the pre-molding roll 10, a pre-molded body of a positive electrode active material layer was formed on the aluminum current collecting foil with an electroconductive adhesive layer. Thereafter, an electrode on which the positive electrode active material layer was pre-molded was pressed by two pairs of 300 mm$\varphi$ molding rolls 12 and 14 heated to 100°C, provided in the downstream of the pre-molding roll 10 of the roll pressure molding apparatus 2, and the electrode density was increased while the surface of the electrode was leveled. The roll pressure molding apparatus 2 was continuously operated for 10 minutes to prepare about 100 m of a positive electrode for lithium ion secondary battery.

{Example 10}

Classification conditions in the manufacture of composite particles were changed. Specifically, using a screen mesh with an opening of 150 um, the coarse particles on the screen mesh were removed. In addition, the composite particles under the screen mesh were screened using a screen mesh of 45 $\mu$m, and the particles under the screen mesh were removed. The manufacture of composite particles was performed in the same manner as in Example 9 except for changing classification conditions. Particles of 40 $\mu$m or less of the composite particles was 20% of the entire amount in a number-based particle size distribution, the cumulative 95% size (D95 size) was 85 $\mu$m in a volume-based particle size distribution, and the cumulative 50% size (D50 size) was 58 $\mu$m in a volume-based particle size distribution. Further, the compression degree was 11%, and the sphericity was 5%. A positive electrode for lithium ion secondary battery was prepared in the same manner as in Example 9 except for using the above composite particles.

{Example 11}

Classification conditions in the manufacture of composite particles were changed. Specifically, using a screen mesh with an opening of 150 $\mu$m, the coarse particles on the screen mesh were removed. In addition, the composite particles under the screen mesh were screened using a screen mesh of 38 $\mu$m, and the particles under the screen mesh were removed. The manufacture of composite particles was performed in the same manner as in Example 9 except for changing classification conditions. Particles of 40 $\mu$m or less of the composite particles was 33% of the entire amount in a number-based particle size distribution, the cumulative 95% size (D95 size) was 82 $\mu$m in a volume-based particle size distribution, and the cumulative 50% size (D50 size) was 55 $\mu$m in a volume-based particle size distribution. Further, the compression degree was 13%, and the sphericity was 4%. A positive electrode for lithium ion secondary battery was prepared in the same manner as in Example 9 except for using the above composite particles.

{Comparative Example 1}

The manufacture of composite particles was performed in the same manner as in Example 1, except for changing a rotation speed of the pin type atomizer to 16,700 rpm, and that classification was not performed. Particles of 40 $\mu$m or less of the composite particles was 60% of the entire amount in a number-based particle size distribution, the cumulative 95% size (D95 size) was 158 $\mu$m in a volume-based particle size distribution, and the cumulative 50% size (D50 size) was 84 $\mu$m in a volume-based particle size distribution. Further, the compression degree was 20%, and the sphericity was 7%. A negative electrode for lithium ion secondary battery was prepared in the same manner as in Example 1 except for using the above composite particles.

{Comparative Example 2}

The manufacture of composite particles was performed in the same manner as in Example 1 except that classification was not performed. Particles of 40 $\mu$m or less of the composite particles was 63% of the entire amount in a number-based particle size distribution, the cumulative 95% size (D95 size) was 93 $\mu$m in a volume-based particle size distribution, and the cumulative 50% size (D50 size) was 57 $\mu$m in a volume-based particle size distribution. Further, the compression degree was 10%, and the sphericity was 10%. A negative electrode for lithium ion secondary battery was prepared in the same manner as in Example 1 except for using the above composite particles.

{Comparative Example 3}

The slurry for composite particles used in Example 1 was fed to an apparatus manufacturing particles with small diameters equipped with a nozzle having a nozzle diameter of 200 $\mu$m (manufactured by BRACE GmbH) at 5 g/min, and the slurry was sprayed while applying vibration to the nozzle in the conditions at a vibration frequency of 2000 Hz, and an amplitude of 500 mV. Further, the sprayed slurry was dried in the conditions at a hot air temperature of 150°C, and at a temperature of a particle recovery exit of 90°C to obtain composite particles. Particles of 40 $\mu$m or less of the composite particles was 0% of the entire amount in a number-based particle size distribution, the cumulative 95% size (D95 size) was 420 $\mu$m in a volume-based particle size distribution, and the cumulative 50% size (D50 size) was 380 $\mu$m in a volume-based particle size distribution. Further, the compression degree was 8%, and the sphericity was 4%. A negative electrode for lithium ion secondary battery was prepared in the same manner as in Example 1 except for using the above composite particles.

{Table 1}

EP 3 174 139 B1

| | | | | Ex. 1 | Ex. 2 | Ex. 3 | Ex. 4 | Ex. 5 | Ex. 6 | Ex. 7 |
|---|---|---|---|---|---|---|---|---|---|---|
| Composite particles | | Ratio of particles of 40 μm or less (number %) | | 0 | 0 | 13 | 38 | 0 | 26 | 0 |
| | | Cumulative 95% particle size (D95 in terms of volume) (μm) | | 150 | 137 | 94 | 81 | 98 | 78 | 260 |
| | | Cumulative 50% particle size (D50 in terms of volume) (μm) | | 110 | 87 | 61 | 54 | 75 | 52 | 125 |
| | | Compression degree (%) | | 11 | 12 | 13 | 14 | 13 | 13 | 13 |
| | | Sphericity (%) | | 5 | 5 | 7 | 8 | 5 | 8 | 3 |
| Slurry for composite particles | Composition | Electrode active material | Kind | Artificial graphite | Artificial graphite | Artificial graphite | Artificial graphite | Artificial graphite | Artificial graphite | Artificial graphite |
| | | | Amount (part) | 97.7 | 97.7 | 97.7 | 97.7 | 97.7 | 97.7 | 97.7 |
| | | Binder resin | Kind | SBR | SBR | SBR | SBR | SBR | SBR | SBR |
| | | | Amount (part) | 1.6 | 1.6 | 1.6 | 1.6 | 1.6 | 1.6 | 1.6 |
| | | CMC | Amount (part) | 0.7 | 0.7 | 0.7 | 0.7 | 0.7 | 0.7 | 0.7 |
| | Slurry solid content concentration | | | 35% | 35% | 35% | 35% | 35% | 35% | 35% |
| | Spray method (type of atomizer) | | | Pin type atomizer | Pin type atomizer | Pin type atomizer | Pin type atomizer | Pin type atomizer | Pin type atomizer | Pressure nozzle |
| Classification (Opening of screen mesh (μm)) | | | | 106-125 | 75-135 | 53-135 | 38-135 | 75-93 | 45-63 | 106-250 |
| Evaluation items | | Basis weight precision | | A | A | A | B | A | B | B |
| | | Appearance of electrode | | Good | Good | Good | Good | Good | Good | Minute scrapes are present |
| | | Thickness precision | | A | A | B | C | B | B | B |

19

{Table 1-2}

EP 3 174 139 B1

| | | | | Ex. 8 | Ex. 9 | Ex. 10 | Ex. 11 | Comp. Ex. 1 | Comp. Ex. 2 | Comp. Ex. 3 |
|---|---|---|---|---|---|---|---|---|---|---|
| Composite particles | | Ratio of particles of 40 μm or less (number %) | | 3 | 10 | 20 | 33 | 60 | 63 | 0 |
| | | Cumulative 95% particle size (D95 in terms of volume) (μm) | | 126 | 87 | 85 | 82 | 158 | 93 | 420 |
| | | Cumulative 50% particle size (D50 in terms of volume) (μm) | | 88 | 56 | 58 | 55 | 84 | 57 | 380 |
| | | Compression degree (%) | | 12 | 9 | 11 | 13 | 20 | 10 | 8 |
| | | Sphericity (%) | | 6 | 4 | 5 | 4 | 7 | 10 | 4 |
| Slurry for composite particles | Composition | Electrode active material | Kind | Artificial graphite | LCO | LCO | LCO | Artificial graphite | Artificial graphite | Artificial graphite |
| | | | Amount (part) | 97.7 | LCO (91.5) AB (electro-conductive material) (6) | LCO (91.5) AB (electro-conductive material) (6) | LCO (91.5) AB (electro-conductive material) (6) | 97.7 | 97.7 | 97.7 |
| | | Binder resin | Kind | SBR | Acrylate-based polymer | Acrylate-based polymer | Acrylate-based polymer | SBR | SBR | SBR |
| | | | Amount (part) | 1.6 | 1.5 | 1.5 | 1.5 | 1.6 | 1.6 | 1.6 |
| | | CMC | Amount (part) | 0.7 | 1 | 1 | 1 | 0.7 | 0.7 | 0.7 |
| | Slurry solid content concentration | | | 35% | 50% | 50% | 50% | 35% | 35% | 35% |
| | Spray method (type of atomizer) | | | Cup type atomizer | Pin type atomizer | Pin type atomizer | Pin type atomizer | Pin type atomizer | Pin type atomizer | Vibration spray |
| Classification (Opening of screen mesh (μm)) | | | | None | 53-150 | 45-150 | 38-150 | None | None | None |
| Evaluation items | | Basis weight precision | | A | A | B | B | C | D | E |
| | | Appearance of electrode | | Good | Good | Good | Good | Scrapes are present | Many variations and chips are present | Many scrapes and chips are present |
| | | Thickness precision | | A | B | B | C | D | E | B |

As shown in Table 1, basis weight precision, appearance of the electrode, and thickness precision of the electrode obtained using composite particles for an electrochemical device electrode that are obtained by spray-drying a slurry containing an electrode active material and a binder resin, in which particles of 40 μm or less are 50% or less of an entire amount in a number-based particle size distribution obtained by particle size measurement using a laser light diffraction method and the cumulative 95% size (D95 size) is 300 μm or less in a volume-based particle size distribution obtained by particle size measurement using a laser light diffraction method were favorable.

**Claims**

1. A method for manufacturing an electrochemical device electrode comprising:

   a step of spray-drying a slurry comprising an electrode active material and a binder resin,
   a step of classifying granulated materials obtained by the step of spray-drying, and
   a step of obtaining an electrode active material layer, by pressure-molding an electrode material containing composite particles for an electrochemical device electrode on the current collector, the composite particles being obtained by the step of classifying, wherein
   the composite particles for an electrochemical device electrode have
   particles of 40 μm or less in an amount of 50% or less of an entire amount in a number-based particle size distribution obtained by particle size measurement using a laser light diffraction method, and
   a cumulative 95% size (D95 size) of 300 μm or less in a volume-based particle size distribution obtained by particle size measurement using a laser light diffraction method.

2. The method for manufacturing an electrochemical device electrode according to claim 1, wherein the composite particles for an electrochemical device electrode have a compression degree of 15% or less, the compression degree being calculated using loose bulk density and packed bulk density as represented by a following formula (1), wherein
   the loose bulk density is measured by passing the composite particles through a JIS 22 mesh (710 μm) screen and uniformly supplying into a container having a volume of 100 mL from 23 cm above, leveling off the composite particles at the top surface of the container, and weighing the composite particles, and
   the packed bulk density is measured by a cap being fitted to the top of the same container that the loose bulk density is measured, adding the composite particles to the upper edge of the cap, tapping being performed 180 times from a tap height of 1.8 cm, the cap being removed after completion of the tapping, leveling off the composite particles at the top surface of the container, and weighing the composite particles.

   $$\text{Compression degree} = \{(\text{Packed bulk density} - \text{Loose bulk density}) / \text{Packed bulk density}\} \times 100 \qquad \text{Formula (1)}$$

3. The method for manufacturing an electrochemical device electrode according to claim 1 or 2, the method using the composite particles for an electrochemical device electrode, wherein a sphericity given in terms of % represented by (ll - ls) × 100/la is 15 or less when a minor axis diameter and a major axis diameter of the composite particles for an electrochemical device electrode are defined as ls and ll, respectively, and la = (ls + ll)/2.

4. An electrochemical device comprising an electrochemical device electrode obtained by the method for manufacturing an electrochemical device electrode according to any one of claims 1 to 3.

**Patentansprüche**

1. Ein Verfahren zur Herstellung einer Elektrode für eine elektrochemische Vorrichtung umfassend:

   einen Schritt zur Sprühtrocknung einer Aufschlämmung umfassend ein elektrodenaktives Material und ein Bindeharz,
   einen Schritt zur Klassifizierung des granulierten Materials, das durch den Sprühtrocknungsschritt hergestellt wurde, und
   einen Schritt zur Herstellung einer Schicht aus elektrodenaktivem Material durch Formdrucken eines Elektrodenmaterials umfassend Kompositpartikel für eine Elektrode für eine elektrochemische Vorrichtung auf den Stromkollektor, wobei die Kompositpartikel durch den Klassifizierungsschritt hergestellt wurden, wobei die Kompositpartikel für eine Elektrode für eine elektrochemische Vorrichtung

Partikel von 40 $\mu$m oder weniger in einer Menge von 50% oder weniger der Gesamtmenge enthalten, beruhend auf einer zahlenmäßigen Partikelgrößenverteilung erhalten durch Partikelgrößenmessung mit einer Laserlichtdiffraktions-Methode, und

eine kumulierte 95%-Größe (D95-Größe) von 300 $\mu$m oder weniger haben, beruhend auf einer volumenmäßigen Partikelgrößenverteilung erhalten durch Partikelgrößenmessung mit einer Laserlichtdiffraktions-Methode.

2. Das Verfahren zur Herstellung einer Elektrode für eine elektrochemische Vorrichtung gemäß Anspruch 1, wobei die Kompositpartikel für eine Elektrode für eine elektrochemische Vorrichtung einen Kompressionsgrad von 15% oder weniger haben, wobei der Kompressionsgrad berechnet wird unter Verwendung von Losematerial-Dichte und Gepacktmaterial-Dichte wie in der folgenden Formel (1) gezeigt, wobei

die Losematerial-Dichte gemessen wird dadurch, dass die Kompositpartikel durch ein JIS 22-Mesh (710 $\mu$m)-Sieb gegeben und aus 23 cm Höhe einheitlich abgefüllt werden in einen Behälter mit einem Volumen von 100 mL, die Kompositpartikel mit der Oberkante des Behälters nivelliert werden, und die Kompositpartikel gewogen werden, und die Gepacktmaterial-Dichte gemessen wird dadurch, dass eine Kappe auf denselben Behälter gesetzt wird, in welchem die Losematerial-Dichte gemessen wird, die Kompositpartikel bis zur Oberkante der Kappe eingefüllt werden, aus einer Klopfhöhe von 1,8 cm 180mal geklopft wird, danach die Kappe entfernt wird, die Kompositpartikel mit der Oberkante des Behälters nivelliert werden, und die Kompositpartikel gewogen werden.

$$\mathrm{Kompressionsgrad} = \{(\mathrm{Gepacktmaterial\text{-}Dichte} - \mathrm{Losematerial\text{-}Dichte}) / \mathrm{Gepacktmaterial\text{-}Dichte}\} \times 100 \qquad \mathrm{Formel}\ (1)$$

3. Das Verfahren zur Herstellung einer Elektrode für eine elektrochemische Vorrichtung gemäß Anspruch 1 oder 2, wobei das Verfahren Kompositpartikel für eine Elektrode für eine elektrochemische Vorrichtung verwendet, bei denen eine Sphärizität, angegeben in % repräsentiert durch (ll - ls) $\times$ 100/la, 15 oder weniger ist, wenn der kleinste Achsendurchmesser und der größte Achsendurchmesser der Kompositpartikel für eine Elektrode für eine elektrochemische Vorrichtung jeweils definiert sind als ls und ll und wobei la = (ls + ll)/2 gilt.

4. Eine elektrochemische Vorrichtung umfassend eine Elektrode für eine elektrochemische Vorrichtung hergestellt mit dem Verfahren zur Herstellung einer Elektrode für eine elektrochemische Vorrichtung gemäß einem der Ansprüche 1 bis 3.

**Revendications**

1. Procédé de fabrication d'une électrode de dispositif électrochimique comprenant :

une étape de séchage par atomisation d'une suspension concentrée comprenant un matériau actif d'électrode et une résine liante,
une étape de classement de matériaux granulés obtenus par l'étape de séchage par atomisation, et
une étape d'obtention d'une couche de matériau actif d'électrode, par moulage par pression d'un matériau d'électrode contenant des particules composites pour une électrode de dispositif électrochimique sur le collecteur de courant, les particules composites étant obtenues par l'étape de classement, dans lequel
les particules composites pour une électrode de dispositif électrochimique comportent des particules de 40 $\mu$m ou moins en une quantité de 50 % ou moins d'une quantité totale dans une distribution granulométrique à base de nombre obtenue par mesure de taille de particule au moyen d'un procédé de diffraction de lumière laser, et une taille cumulée à 95 % (taille D95) de 300 $\mu$m ou moins dans une distribution granulométrique à base de volume obtenue par mesure de taille de particule au moyen d'un procédé de diffraction de lumière laser.

2. Procédé de fabrication d'une électrode de dispositif électrochimique selon la revendication 1, dans lequel les particules composites pour une électrode de dispositif électrochimique ont un degré de compression de 15 % ou moins, le degré de compression étant calculé en utilisant la densité apparente en vrac et la densité apparente tassée telles que représentées par une formule (1) suivante, dans laquelle
la densité apparente en vrac est mesurée par passage des particules composites à travers un tamis JIS 22 mesh

(710 $\mu$m) et distribution uniforme dans un récipient ayant un volume de 100 ml depuis 23 cm au-dessus, nivelage des particules composites à la surface supérieure du récipient, et pesage des particules composites, et

la densité apparente tassée est mesurée par un capuchon étant ajusté au sommet du même récipient que celui dans lequel la masse volumique apparente lâche est mesurée, ajout des particules composites jusqu'au bord supérieur du capuchon, un tapotement étant effectué 180 fois depuis une hauteur de tapotement de 1,8 cm, le capuchon étant retiré après l'achèvement du tapotement, nivelage des particules composites à la surface supérieure du récipient, et pesage des particules composites.

```
Degré de compression = {(densité apparente tassée – densité
apparente  en  vrac)  /  densité  apparente  tassée}  x  100
            Formule (1)
```

3. Procédé de fabrication d'une électrode de dispositif électrochimique selon la revendication 1 ou 2, le procédé utilisant les particules composites pour une électrode de dispositif électrochimique, dans lequel une sphéricité exprimée en termes de % représentée par (11 - ls) x 100/la est de 15 ou moins lorsqu'un diamètre de petit axe et un diamètre de grand axe des particules composites pour une électrode de dispositif électrochimique sont définis comme étant ls et ll, respectivement, et la = (ls + ll)/2.

4. Dispositif électrochimique comprenant une électrode de dispositif électrochimique obtenue par le procédé de fabrication d'une électrode de dispositif électrochimique selon l'une quelconque des revendications 1 à 3.

FIG. 1

## REFERENCES CITED IN THE DESCRIPTION

**Patent documents cited in the description**

- WO 2013039131 A1
- JP 4929792 B
- JP 5141002 B
- JP 2001176757 A